**Europäisches Patentamt**

(19) **European Patent Office**

**Office européen des brevets**

(11) Veröffentlichungsnummer: **0 010 230 B1**

(12) **EUROPÄISCHE PATENTSCHRIFT**

(45) Veröffentlichungstag der Patentschrift:
**03.10.84**

(51) Int. Cl.³: **C 08 L 21/00,** C 08 J 5/12, C 08 K 3/08, C 08 K 3/12, C 08 K 5/56

(21) Anmeldenummer: **79103797.1**

(22) Anmeldetag: **05.10.79**

(54) Kautschukmasse mit verbesserter Alterungsbeständigkeit und Verfahren zu ihrer Herstellung.

(30) Priorität: **20.10.78 DE 2845781**

(43) Veröffentlichungstag der Anmeldung:
**30.04.80 Patentblatt 80/9**

(45) Bekanntmachung des Hinweises auf die Patenterteilung:
**03.10.84 Patentblatt 84/40**

(84) Benannte Vertragsstaaten:
**AT BE FR GB IT**

(56) Entgegenhaltungen:
**DE - C - 537 033**
**FR - A - 1 015 869**
**FR - A - 1 018 848**
**FR - A - 1 059 783**
**FR - A - 2 024 359**
**FR - A - 2 197 893**
**GB - A - 1 175 978**
**US - A - 2 502 949**
**US - A - 2 943 073**
**US - A - 3 687 881**

**Die Akte enthält technische Angaben, die nach dem Eingang der Anmeldung eingereicht wurden und die nicht in dieser Patentschrift enthalten sind.**

(73) Patentinhaber: **Heckmann, Klaus, Prof. Dr., Zum Aichahof 20, D-8400 Regensburg (DE)**

(72) Erfinder: **Heckmann, Klaus, Prof. Dr., Zum Aichahof 20, D-8400 Regensburg (DE)**
Erfinder: **Brunner, Henri, Prof. Dr., Eichendorffstrasse 14, D-8411 Regensburg-Lappersdorf (DE)**
Erfinder: **Dobias, Bohuslav Dr., Alfons-Auer-Strasse 16b, D-8400 Regensburg (DE)**

(74) Vertreter: **Kraus, Walter, Dr. et al, Patentanwälte Kraus & Weisert Irmgardstrasse 15, D-8000 München 71 (DE)**

## Beschreibung

Die Erfindung betrifft eine Kautschukmasse mit hoher Alterungsbeständigkeit der Haftung Kautschuk/Metall sowie ein Verfahren zur Verbesserung der Alterungsbeständigkeit der Haftfestigkeit von Kautschuk an Metalloberflächen. Die Erfindung betrifft weiterhin die Verwendung von Verbindungen mit Metall-Kohlenstoffbindungen zur Verbesserung der Alterungsbeständigkeit der Haftfestigkeit von Kautschuk auf Metalloberflächen.

Zur Verhinderung der durch Sauerstoff-, Ozon-, Licht- und Hitzeeinwirkung bedingten, nachteiligen Alterungsvorgänge setzt man dem Synthese- oder Naturkautschuk vor der Vulkanisation häufig Alterungsschutzmittel bei. Als Alterungsschutzmittel werden β-Naphthylamin, p-Phenylendiamin oder Mercaptobenzimidazol oder Phenolderivate verwendet. Jedoch verhindern diese Alterungsschutzmittel, die auch teilweise als Stabilisatoren bezeichnet werden, die Alterung des Kautschuks nur in begrenztem Masse. Auf die Beständigkeit der Haftung Metall/Kautschuk gegenüber Alterungserscheinungen haben diese Zusätze allerdings keinen oder einen negativen Einfluss. Beim Altern des Kautschuks treten unter anderem Vernetzungen und Cyclisierungen auf, die eine Verhärtung und Versprödung bewirken. Die Alterung des Kautschuks ist unerwünscht, da sich dadurch seine physikalischen Eigenschaften verschlechtern und in vielen Fällen der Kautschuk bzw. die aus ihm hergestellten Produkte unbrauchbar werden. Alterungsschutzmittel, die neben dem Kautschuk speziell die Bindung Kautschuk/Metall schützen, sind nicht bekannt.

Die Alterung ist insbesondere bei Produkten, die in Kautschuk eingebettete Metalleinlagen enthalten, ein grosses Problem. Durch die Alterung des Kautschuks verschlechtert sich in vielen Fällen die Haftung zwischen Kautschuk und Metall.

Eine gute Haftung von Kautschuk an Metall ist für zahlreiche Zwecke wünschenswert, besonders jedoch bei der Herstellung von Fahrzeugreifen mit Metallcordeinlagen. In diesem Fall ist es wichtig, dass die Bindung zwischen dem Metall und dem Kautschuk eine möglichst hohe Haftfestigkeit, Elastizität und Lebensdauer aufweist. Nur so können optimale Fahreigenschaften erreicht werden. Mangelnde Haftfestigkeit der Bindung Metall/Kautschuk führt zur vorzeitigen Zerstörung des Reifenkörpers. Die Lebensdauer der Bindung Kautschuk/Metall wird in erster Linie durch erhöhte Temperatur, durch Oxydationsprozesse und durch korrosive Einflüsse, wie Feuchtigkeit und Salz, beeinträchtigt, d.h. Einwirkungen, die auch das Altern des Kautschuks bewirken.

In der DE-C-537 033 wird ein Verfahren zur Härtung von härtbaren Polymerisationsprodukten von Diolefinen oder diese enthaltenden Produkten beschrieben, bei dem man Metallcarbonyle gegebenenfalls zusammen mit anderen Stoffen zusetzt. Als Metallcarbonyle werden Eisen-, Kobalt- oder Nickelcarbonyle erwähnt. Hinsichtlich einer Verbesserung der Haftung von Kautschuk an Metall finden sich in dieser Literaturstelle keine Hinweise.

In der US-A-2 943 073 wird eine Kautschukmasse beschrieben, welche Verbindungen der Formel $R_2MCl_2$ enthält, wobei R einen Kohlenwasserstoffrest bedeutet, der einen Cyklopentadienylring enthält. Diese Verbindungen werden als Mittel zur Verbesserung der Härtung eingesetzt. Wie aus Spalte 2, Zeilen 3 ff dieser Literaturstelle hervorgeht, liegt dieser Literaturstelle die Aufgabe zugrunde, eine Kautschukmasse zur Verfügung zu stellen, die schneller härtet und einen erhöhten Härtungszustand aufweist. Durch diesen «erhöhten Härtungszustand» sollen die Härtezugfestigkeit, der Modul, die Dehnung und die Druckfestigkeit erhöht werden. Hinsichtlich einer Verbesserung der Alterungsbeständigkeit der Haftfestigkeit, die ein solcher gehärteter Kautschuk zu einer Metalloberfläche aufweisen würde, finden sich in dieser Literaturschrift keine Angaben. Auch besteht zwischen erhöhter Härte eines Kautschuks und verbesserter Alterungsbeständigkeit seiner Haftung an Metalloberflächen kein bekannter zwingender physikalischer oder chemischer Zusammenhang. Die Kenntnis des in US-A-2 943 073 offenbarten Verfahrens kann also auch nicht die Suche nach einem Verfahren zur Verbesserung der Alterungsbeständigkeit der Haftung Metall/Kautschuk erleichtern. Im Gegenteil: Der Fachmann weiss, dass einige Haftsysteme, die zufällig auch eine erhöhte Härtung des Kautschuks bewirken, zu einer Versprödung des Kautschuks in der Nähe der Haftfläche führen und dass eben darum ein Bedarf an nichtversprödeten Haftsystemen besteht. Man würde also unter den Substanzen, die zu einer Härtung von Kautschuk führen, gerade nicht Ausschau halten nach Haftvermittlern oder nach Stabilisatoren für Haftvermittler. Es war überhaupt nicht vorauszusehen, dass die Verwendung von Metallcarbonylen nicht zu einer schädlichen Versprödung des Kautschuks in der Nähe der Haftfläche führen würde. Dass Metallcarbonyle die Alterungsbeständigkeit der Haftung heraufsetzen würden, war darum ausserordentlich überraschend.

Der vorliegenden Erfindung liegt daher die Aufgabe zugrunde, die Alterungsbeständigkeit von Kautschuk zu verbessern und insbesondere die Alterungsbeständigkeit von Kautschuk, der mit Metallen verbunden werden soll, zu verbessern, so dass die Haftfestigkeit der Verbindung zwischen Kautschuk und Metall länger erhalten bleibt. Es soll weiterhin ein Verfahren zur Verbesserung der Alterungsbeständigkeit von Kautschuk, insbesondere von Kautschuk, der mit Metallen verbunden werden soll, zur Verfügung gestellt werden. Erfindungsgemäss soll ein stabilisierendes System für die Verbindung Metall/Kautschuk entwickelt werden, das auch unter dem Einfluss von Temperatur und Korrosion über längere Zeit hinweg und bei möglichst hohen Absolutwerten der Haftfestigkeit Retentionswerte von über 70%, nach Möglichkeit von 100%, garantiert.

Überraschenderweise wurde gefunden, dass diese Ziele erreicht werden, wenn man zu der zu vulkanisierenden Kautschukmischung bestimmte Verbindungen zusetzt.

Gegenstand der Erfindung ist eine Kautschukmasse mit hoher Alterungsbeständigkeit der Haftung Kautschuk/Metall, die dadurch gekennzeichnet ist, dass sie 0,01 bis 10 Gew.-% einer Verbindung aus der Gruppe $Mo(CO)_6$, $W(CO)_6$, der gemischten Metallcarbonyle mit π-Akzeptor-Liganden und der Derivate dieser Komplexe aus gemischten Metallcarbonylen mit π-Akzeptor-Liganden mit Wasserstoff-, Metall-, Halogen-, Sauerstoff-, Schwefel- und Stickstoff-Liganden enthält.

Die Erfindung betrifft weiterhin ein Verfahren zur Verbesserung der Alterungsbeständigkeit der Haftfestigkeit von Kautschuk an Metalloberflächen, das dadurch gekennzeichnet ist, dass man der Kautschukmasse, die mit Metall verbunden werden soll, 0,01 bis 10 Gew.-% einer Verbindung aus der Gruppe $Mo(CO)_6$, $W(CO)_6$, der gemischten Metallcarbonyle mit π-Akzeptor-Liganden und der Derivate dieser Komplexe aus gemischten Metallcarbonylen mit π-Akzeptor-Liganden mit Wasserstoff-, Metall-, Halogen-, Sauerstoff-, Schwefel- und Stickstoff-Liganden beimischt und die Kautschukmasse in an sich bekannter Weise unter Vulkanisation mit dem Metall verbindet.

Die Erfindung betrifft weiterhin die Verwendung von Verbindungen mit Metall-Kohlenstoffbindungen zur Verbesserung der Alterungsbeständigkeit der Haftfestigkeit von Kautschuk auf Metalloberflächen, wobei die Verbindungen mit Metall-Kohlenstoffbindungen dadurch gekennzeichnet sind, dass sie zur Gruppe $Mo(CO)_6$, $W(CO)_6$, der gemischten Metallcarbonyle mit π-Akzeptor-Liganden und der Derivate dieser Komplexe aus gemischten Metallcarbonylen mit π-Akzeptor-Liganden mit Wasserstoff-, Metall-, Halogen-, Sauerstoff-, Schwefel- und Stickstoff-Liganden gehören, dass man sie dem Kautschuk in einer Menge von 0,01 bis 10 Gew.-% beimengt und dass sie mit dem Kautschuk zusammen in an sich bekannter Weise vulkanisiert werden.

Erfindungsgemäss werden die Zusatzstoffe dem Kautschuk in einer Menge von 0,01 bis 10 Gew.-%, vorzugsweise in einer Menge von 0,1 bis 5 Gew.-% und am meisten bevorzugt in einer Menge von 0,5 bis 3 Gew.-%, beigemischt. Die Verbindungen können der Kautschukmasse zu irgendeinem Zeitpunkt vor der Vulkanisation beigegeben werden. Sind die Zusatzstoffe Feststoffe bei Zimmertemperatur, so werden sie bevorzugt in Pulverform verwendet. Zusatzstoffe, die flüssig sind, können als solche zugegeben werden. Man kann auch gegebenenfalls ein Lösungsmittel verwenden, das die Vulkanisation der Kautschukmasse nicht stört.

Als Kautschukmasse kann man irgendwelchen Synthese- oder Naturkautschuk verwenden, wobei der Kautschuk alle üblichen Zusatzstoffe enthalten kann.

Die Kautschukmasse kann z.B. nach Bedingungen hergestellt werden, wie sie aus «Encyclopedia of Polymer Science and Technology», Band 12, Seiten 161 bis 353 (Kautschuk); ibid. Band 14, Seiten 42 bis 64 (Reifen und Reifencords); ibid.

Band 8, Seiten 184 bis 185 (Reifencord-Tauschen); ibid. Band 14, Seiten 740 bis 756 (Vulkanisation); «Rubber Chemistry and Technology», 46(4), Seiten 981 bis 998 (Gummi-Textil-Cord-Haftung und Gummi-Stahl-Cord-Haftung); Ullmanns Enzyklopädie der Technischen Chemie, 9. Band, Seiten 305 bis 424, Urban und Schwarzenberg, München-Berlin 1957; sowie Ullmanns Enzyklopädie der Technischen Chemie, Band 13, 4. neubearbeitete und erweiterte Auflage, Verlag Chemie, Weinheim-New York, Seiten 581 bis 709, bekannt sind.

Als gemischte Carbonyle mit π-Akzeptor-Liganden wird die Verbindung $[CpFe(CO)_2]_2$, $[CH_3-C_5H_4Fe(CO)_2]_2$ und als Derivate solcher Komplexe mit Wasserstoff-, Metall-, Halogen-, Sauerstoff-, Schwefel- und Stickstoff-Liganden die Verbindungen $[CpFe(CO)-SR]_2$ (mit R = Methyl-, Ethyl-, Vinyl- oder allgemein geradkettigen oder verzweigten Alkyl- oder Alkenylgruppen sowie R = Phenyl-, Tolyl- oder Arylgruppen), $Cr(CO)_5$Pyridin oder $Mn(CO)_5COCH_3$ verwendet.

Die vorliegende Erfindung ist insbesondere für Kautschuk geeignet, der mit Metall verbunden werden soll. Zum Verbinden von Metall mit Kautschuk verwendet man Haftsysteme. In der DE-A-2 832 235 wird ein Haftsystem aus Tellur, Tellurlegierungen und/oder Tellurverbindungen beschrieben, das zum direkten Verbinden von Kautschuk mit Metalloberflächen geeignet ist. Die erfindungsgemäss verwendeten Zusätze können besonders wirksam zusammen mit dem in der obigen DE-A-beschriebenen Haftvermittlersystems aus Tellur und/oder Tellurverbindungen eingesetzt werden. Das Tellur-Haftsystem verleiht der Verbindung Metall/Kautschuk insbesondere eine hohe Korrosionsbeständigkeit. Die Hitzebeständigkeit ist dagegen etwas geringer. Die Zugabe der erfindungsgemäss aufgeführten Stabilisatoren erhöht insbesondere die Hitzebeständigkeit von Kautschuk-Metall-Produkten, die unter Verwendung des Tellursystems verbunden wurden. Daneben erhält man in der Regel zusätzliche Verbesserungen auch in der Korrosionsbeständigkeit.

Die Wirksamkeit der erfindungsgemässen Stabilisatoren ist jedoch keinesfalls auf das Te-Haftsystem beschränkt. So kann z.B. auch die Beständigkeit des Resorcin-Formaldehyd-Haftsystems gegenüber Korrosionseinflüssen und Hitzealterung wesentlich verbessert werden.

Auf die Offenbarung der oben genannten DE-A wird expressis verbis Bezug genommen.

Die folgenden Beispiele erläutern die Erfindung.

Beispiel 1

Es wird eine Standard-Kautschukmischung mit einem Schwefelgehalt von 7,5%, bezogen auf den Kautschukgehalt, 4,05%, bezogen auf die Fertigmischung, verwendet. Als Haftsystem wird metallisches Tellur in Pulverform benutzt.

Die Mischung wird in an sich bekannter Weise zusammen mit Stahlcord (7 × 4 × 0,175 mm mit vermessingter Oberfläche) während 15 Minuten bei 160 °C vulkanisiert. Die Länge der Einbettung beträgt 2,5 cm. Zwei Stunden nach der Vulkanisation wird in Anlehnung an die ASTM der «Null»-Haftwert durch Ausreissen von Drähten aus der Probe bestimmt. Der Haftwert wird in deka-Newton, abgekürzt «daN», angegeben.

Nach der Vulkanisation wird die Probe einem Korrosions- und einem beschleunigten Alterungstest unterworfen. Bei dem Korrosionstest wird die Probe 16 Stunden lang bei 90°C in gesättigtem Wasserdampf aufbewahrt. Bei dem beschleunigten Alterungstest wird die Probe 3 Tage lang auf 130°C erhitzt. Im Anschluss an diese Tests werden nochmals die Haftwerte bestimmt.

Es werden folgende Versuche durchgeführt:

(1) Standardkautschukmischung ohne Haftvermittler und ohne Stabilisator;

(2) Standardkautschukmischung mit Haftvermittler und ohne Stabilisator;

(3) (erfindungsgemäss) Standardkautschukmischung mit Haftvermittler und mit Stabilisator.

Als Haftvermittler wird Tellur und als Stabilisator Wolframhexacarbonyl verwendet.

Tabelle I

| Versuch Nr. | Menge an Zusatzstoff g/kg Fertigmischung | Haftwerte (daN) | | |
|---|---|---|---|---|
| | | «Null» | nach der Korrosion | nach der Hitzebehandlung |
| 1 | 0,0 | 64 | 82 | 78 |
| 2 | 2,4 Te | 101 | 99 | 94 |
| 3 | 2,4 Wo(CO)$_6$ | 120 | 102 | 114 |

Beispiel 2

Man arbeitet wie in Beispiel 1 beschrieben. Es wird eine Kautschukmischung mit dem gleichen Schwefelgehalt (7,5%, bezogen auf den Kautschukgehalt, 4,05%, bezogen auf die Fertigmischung) verwendet, und als Stabilisator wird Cyclopentadienyl-eisen-dicarbonyl eingesetzt. Die erhaltenen Ergebnisse sind in der folgenden Tabelle II zusammengefasst.

Tabelle II

| Versuch Nr. | Menge an Zusatzstoff g/kg Fertigmischung | Haftwerte (daN) | | |
|---|---|---|---|---|
| | | «Null» | nach der Korrosion | nach der Hitzebehandlung |
| 1 | 0,0 | 64 | 82 | 78 |
| 2 | 2,4 Te | 101 | 99 | 94 |
| 3 | 4,0 [CpFe(CO)$_2$]$_2$ | 128 | 150 | 114 |

Beispiel 3

Man arbeitet wie in Beispiel 1 beschrieben. Nur wird statt des Haftsystems Tellur das Haftsystem Resorcin/Formaldehyd/Kieselsäure verwendet. Als Stabilisator wird Cyclopentadienyl-eisen-dicarbonyl eingesetzt. Die erhaltenen Ergebnisse sind in der folgenden Tabelle III zusammengefasst.

Tabelle III

| Versuch Nr. | Menge an Zusatzstoff g/kg Fertigmischung | Haftwerte (daN) | | |
|---|---|---|---|---|
| | | «Null» | nach der Korrosion | nach der Hitzebehandlung |
| 1 | 0,0 | 102 | 75 | 71 |
| 2 | 98,6 Haftvermittler | 109 | 56 | 88 |
| 3 | 4,0 [CpFe(CO)$_2$]$_2$ | 114 | 111 | 98 |

**Patentansprüche**

1. Kautschukmasse mit hoher Alterungsbeständigkeit der Haftung Kautschuk/Metall, dadurch gekennzeichnet, dass sie 0,01 bis 10 Gew.-% einer Verbindung aus der Gruppe Mo(CO)$_6$, W(CO)$_6$, der gemischten Metallcarbonyle mit π-Akzeptor-Liganden und der Derivate dieser Komplexe aus gemischten Metallcarbonylen mit π-Akzeptor-Liganden mit Wasserstoff-, Metall-, Halogen-, Sauerstoff-, Schwefel- und Stickstoff-Liganden enthält.

2. Kautschukmasse nach Anspruch 1, dadurch gekennzeichnet, dass als gemischte Carbonyle mit π-Akzeptor-Liganden die Verbindung [CpFe(CO)$_2$]$_2$, [CH$_3$–C$_5$H$_4$Fe(CO)$_2$]$_2$ und als Derivate solcher Komplexe mit Wasserstoff-, Metall-, Halogen-, Sauerstoff-, Schwefel- und Stickstoff-Liganden die Verbindungen [CpFe(CO)–SR]$_2$ (mit R = Methyl-, Ethyl-, Vinyl- oder allgemein geradkettigen oder verzweigten Alkyl- oder Alkenylgruppen sowie R = Phenyl-, Tolyl- oder Arylgruppen), Cr(CO)$_5$Pyridin oder Mn(CO)$_5$COCH$_3$ verwendet werden.

3. Verfahren zur Verbesserung der Alterungsbeständigkeit der Haftfestigkeit von Kautschuk an Metalloberflächen, dadurch gekennzeichnet, dass man der Kautschukmasse, die mit Metall verbunden werden soll, 0,01 bis 10 Gew.-% einer Verbindung aus der Gruppe Mo(CO)$_6$, W(CO)$_6$, der gemischten Metallcarbonyle mit π-Akzeptor-Liganden und der Derivate dieser Komplexe aus gemischten Metallcarbonylen mit π-Akzeptor-Liganden mit Wasserstoff-, Metall-, Halogen-, Sauerstoff-, Schwefel- und Stickstoff-Liganden beimischt und die Kautschukmasse in an sich bekannter Weise unter Vulkanisation mit dem Metall verbindet.

4. Verfahren nach Anspruch 3, dadurch gekennzeichnet, dass man als gemischte Carbonyle mit π-Akzeptor-Liganden die Verbindung [CpFe(CO)$_2$]$_2$, [CH$_3$–C$_5$H$_4$Fe(CO)$_2$]$_2$ und als Derivate solcher Komplexe mit Wasserstoff-, Metall-, Halogen-, Sauerstoff-, Schwefel- und Stickstoff-Liganden die Verbindungen [CpFe(CO)SR]$_2$ (mit R = Methyl-, Ethyl-, Vinyl- oder allgemein geradkettigen oder verzweigtkettigen Alkyl- oder Alkenylgruppen sowie R = Phenyl-, Tolyl- oder allgemein Arylgruppen), Cr(CO)$_5$Pyridin oder Mn(CO)$_5$COCH$_3$ verwendet.

5. Verwendung von Verbindungen mit Metall-Kohlenstoffbindungen zur Verbesserung der Alterungsbeständigkeit der Haftfestigkeit von Kautschuk auf Metalloberflächen, wobei die Verbindungen mit Metall-Kohlenstoffbindungen dadurch gekennzeichnet sind, dass sie zur Gruppe Mo(CO)$_6$, W(CO)$_6$, der gemischten Metallcarbonyle mit π-Akzeptor-Liganden und der Derivate dieser Komplexe aus gemischten Metallcarbonylen mit π-Akzeptor-Liganden mit Wasserstoff-, Metall-, Halogen-, Sauerstoff-, Schwefel- und Stickstoff-Liganden gehören, dass man sie dem Kautschuk in einer Menge von 0,01 bis 10 Gew.-% beimengt und dass sie mit dem Kautschuk zusammen in an sich bekannter Weise vulkanisiert werden.

6. Verwendung von Verbindungen mit Metall-Kohlenstoffbindungen nach Anspruch 5, dadurch gekennzeichnet, dass man als gemischte Carbonyle mit π-Akzeptor-Liganden die Verbindung [CpFe(CO)$_2$]$_2$, [CH$_3$–C$_5$H$_4$Fe(CO)$_2$]$_2$ und als Derivate solcher Komplexe mit Wasserstoff-, Metall-, Halogen-, Sauerstoff-, Schwefel- und Stickstoff-Liganden die Verbindungen [CpFe(CO)SR]$_2$ (mit R = Methyl-, Ethyl-, Vinyl- oder allgemein geradkettigen oder verzweigten Alkyl- oder Alkenylgruppen sowie R = Phenyl-, Tolyl- oder allgemein Arylgruppen), Cr(CO)$_5$Pyridin oder Mn(CO)$_5$COCH$_3$ verwendet.

## Claims

1. A rubber composition having a high ageing resistance of the rubber-to-metal bond, characterized in that it contains from 0.01 to 10% by weight of a compound from the group comprising Mo(CO)$_6$, W(CO)$_6$, mixed metal carbonyls with π-acceptor ligands and derivatives of these complexes of mixed metal carbonyls with π-acceptor ligands with hydrogen, metal, halogen, oxygen, sulfur and nitrogen ligands.

2. A rubber composition as claimed in claim 1, characterized in that the compounds [CpFe(CO$_2$]$_2$, [CH$_3$–C$_5$H$_4$Fe(CO)$_2$]$_2$ are used as the mixed carbonyls with π-acceptor ligands and the compounds [CpFe(CO)–SR]$_2$ (with R = methyl, ethyl, vinyl or generally straight-chain or branched-chain alkyl or alkenyl groups and R = phenyl, tolyl or aryl groups), Cr(CO)$_5$pyridine or Mn(CO)$_5$-COCH$_3$ are used as the derivatives of those complexes with hydrogen, metal, halogen, oxygen, sulfur and nitrogen ligands.

3. A process for improving the ageing resistance of rubber-to-metal bonds, characterized in that from 0.01 to 10% by weight of a compound selected from the group comprising Mo(CO)$_6$, W(CO)$_6$, mixed carbonyls with π-acceptor ligands and derivatives of these complexes of mixed metal carbonyls with π-acceptor ligands with hydrogen, metal, halogen, oxygen, sulfur and nitrogen ligands is added to the rubber composition which is to be bonded to metal and the rubber composition is bonded to the metal in known manner by vulcanization.

4. A process as claimed in claim 3, characterized in that the compounds [CpFe(CO)$_2$]$_2$, [CH$_3$–C$_5$H$_4$Fe(CO)$_2$]$_2$ are used as the mixed carbonyls with π-acceptor ligands and the compounds [CpFe(CO)SR]$_2$ (with R = methyl, ethyl, vinyl or generally straight-chain or branched-chain alkyl or alkenyl groups and R = phenyl, tolyl or generally aryl groups), Cr(CO)$_5$pyridine or Mn(CO)$_5$COCH$_3$ are used as the derivatives of those complexes with hydrogen, metal, halogen, oxygen, sulfur and nitrogen ligands.

5. The use of compounds containing metal-carbon bonds for improving the ageing resistance of rubber-to-metal bonds, the compounds containing metal-carbon bonds being characterized in that they belong to the group comprising Mo(CO)$_6$, W(CO)$_6$, mixed metal carbonyls with π-acceptor ligands derivatives of those complexes of mixed metal carbonyls with π-acceptor ligands with hydrogen, metal, halogen, oxygen, sulfur and nitrogen ligands, in that they are added to the rubber in a quantity of from 0.01 to 10% by weight and in that they are vulcanized together with the rubber in known manner.

6. The use of compounds containing metal-carbon bonds as claimed in claim 5, characterized in that the compounds [CpFe(CO)$_2$]$_2$, [CH$_3$–C$_5$H$_4$Fe(CO)$_2$]$_2$ are used as the mixed carbonyls with π-acceptor ligands and the compounds [CpFe(CO)SR]$_2$ (with R = methyl, ethyl, vinyl or generally straight-chain or branched-chain alkyl or alkenyl groups and R = phenyl, tolyl or generally aryl groups), Cr(CO)$_5$pyridine or Mn(CO)$_5$COCH$_3$ are used as the derivatives of those complexes with hydrogen, metal, halogen, oxygen, sulfur and nitrogen ligands.

## Revendications

1. Composition de caoutchouc ayant une grande résistance au vieillissement de l'adhérence caoutchouc/métal, caractérisée en ce qu'elle contient 0,01 à 10% en poids d'un composé du groupe comprenant $Mo(CO)_6$, $W(CO)_6$, les carbonylmétaux mixtes à coordinats accepteurs $\pi$ et les dérivés de ces complexes de carbonylmétaux mixtes à coordinats accepteurs $\pi$ et de coordinats hydrogène, métal, halogène, oxygène, soufre et azote.

2. Composition de caoutchouc selon la revendication 1, caractérisée en ce que comme carbonyles mixtes à coordinats accepteurs $\pi$, on utilise le composé $[CpFe(CO)_2]_2$, $[CH_3-C_5H_4Fe(CO)_2]_2$ et comme dérivés de tels complexes et de coordinats hydrogène, métal, halogène, oxygène, soufre et azote, les composés $[CpFe(CO)-SR]_2$ (dans lequel R = groupes méthyle, éthyle, vinyle ou en général groupes alkyle ou alcényle à chaîne droite ou ramifiés, ainsi que R = groupes phényle, tolyle ou aryle), $Cr(CO)_5$-pyridine ou $Mn(CO)_5COCH_3$.

3. Procédé d'amélioration de la résistance au vieillissement de l'adhérence du caoutchouc à des surfaces métalliques, caractérisé en ce que l'on incorpore à la composition de caoutchouc qu'il s'agit de lier à du métal 0,01 à 10% en poids d'un composé du groupe comprenant $Mo(CO)_6$, $W(CO)_6$, les carbonylmétaux mixtes à coordinats accepteurs $\pi$ et les dérivés de ces complexes de carbonylmétaux mixtes à coordinats accepteurs $\pi$ et de coordinats hydrogène, métal, halogène, oxygène, soufre et azote et que l'on lie de manière en elle-même connue la composition de caoutchouc au métal, avec vulcanisation.

4. Procédé selon la revendication 3, caractérisé en ce que comme carbonyles mixtes à coordinats accepteurs $\pi$, on utilise le composé $[CpFe(CO)_2]_2$, $[CH_3-C_5H_4Fe(CO)_2]_2$ et comme dérivés de tels complexes et de coordinats hydrogène, métal, halogène, oxygène, soufre et azote, les composés $[CpFe(CO)SR]_2$ (dans lequel R = groupes méthyle, éthyle, vinyle ou en général groupes alkyle ou alcényle à chaîne droite ou ramifiés, ainsi que R = groupes phényle, tolyle ou généralement groupes aryle), $Cr(CO)_5$-pyridine ou $Mn(CO)_5$-$COCH_3$.

5. Utilisation de composés à liaisons métalcarbone pour l'amélioration de la résistance au vieillissement de l'adhérence du caoutchouc à des surfaces métalliques, lesdits composés à liaisons métal-carbone étant caractérisés en ce qu'ils appartiennent au groupe comprenant $Mo(CO)_6$, $W(CO)_6$, les carbonylmétaux mixtes à coordinats accepteurs $\pi$ et les dérivés de ces complexes de carbonylmétaux mixtes à coordinats accepteurs $\pi$ et de coordinats hydrogène, métal, halogène, oxygène, soufre et azote, qu'on les incorpore au caoutchouc à raison de 0,01 à 10% en poids et qu'on les vulcanise de manière en elle-même connue en même temps que le caoutchouc.

6. Utilisation de composés à liaisons métalcarbone selon la revendication 5, caractérisée en ce que comme carbonyles mixtes à coordinats accepteurs $\pi$, on utilise le composé $[CpFe(CO)_2]_2$, $[CH_3-C_5H_4Fe(CO)_2]_2$ et comme dérivés de tels complexes et de coordinats hydrogène, métal, halogène, oxygène, soufre et azote, les composés $[CpFe(CO)SR]_2$ (dans lequel R = groupes méthyle, éthyle, vinyle ou en général groupes alkyle ou alcényle à chaîne droite ou ramifiés, ainsi que R = groupes phényle, tolyle ou généralement groupes aryle), $Cr(CO)_5$-pyridine ou $Mn(CO)_5$-$COCH_3$.